# EUROPEAN PATENT APPLICATION

(11) **EP 4 821 619 A1**
(43) Date of publication of application: **14.10.2026**
(21) Application number: 26165567.4
(22) Date of filing: 17.03.2026
(51) Int. Cl.: B22F 10/85, B22F 10/28, B22F 10/38, B22F 12/90, B33Y 10/00, B33Y 30/00, B33Y 50/02, G06N 20/00

(54) **LASER POWDER BED FUSION ADDITIVE MANUFACTURING ANOMALY DETECTION**

(30) Priority: 26.03.2025 US 202519090822
(71) Applicant: General Electric Company, Cincinnati, Ohio 45215 (US)
(72) Inventor: GOLD, Scott Alan, Evendale, Ohio 45215 (US); SMOQI, Ziyad, Evendale, Ohio 45215 (US)
(74) Representative: Openshaw & Co.

(57) **Abstract**

Aspects of the present disclosure provide techniques for additive manufacturing anomaly detection. An example method includes obtaining, from an electromagnetic energy sensor (202, 204), a time-series signal (410) comprising a plurality of samples, wherein the samples correspond to electromagnetic emissions from an interaction between a first energy source (120) and powder (142) at a first focal point on a layer (172) of additive material (142) and the samples are generated at a sampling rate greater than or equal to a first sampling rate; decomposing the time-series signal into at least a high-frequency signal variation component (430); computing one or more spatiotemporal statistical values from the high-frequency signal variation component of the time-series signal; identifying, with a machine learning model (526), one or more perturbations, from the one or more spatiotemporal statistical values, that exceeds a predetermined threshold corresponding to the one or more spatiotemporal statistical values; and generating an alert in response to identifying the one or more perturbations.

## Description

### TECHNICAL FIELD

The present specification relates to systems and methods for additive manufacturing anomaly detection.

### BACKGROUND

Additive manufacturing (AM) processes generally involve the buildup of one or more materials to make a net or near net shape (NNS) object, in contrast to subtractive manufacturing methods. Though "additive manufacturing" is an industry standard term (ISO/ASTM52900), AM encompasses various manufacturing and prototyping techniques known under a variety of names, including freeform fabrication, 3D printing, rapid prototyping/tooling, etc. AM techniques are capable of fabricating complex components from a wide variety of materials. Generally, a freestanding object can be fabricated from a computer aided design (CAD) model.

A particular type of AM process uses an energy source such as an irradiation emission directing device that directs an energy beam, for example, an electron beam or a laser beam, to sinter or melt a powder material, creating a solid three-dimensional object in which particles of the powder material are bonded together. AM processes may use different material systems or additive powders, such as engineering plastics, thermoplastic elastomers, metals, and/or ceramics. Laser sintering or melting is a notable AM process for rapid fabrication of functional prototypes and tools. Applications include direct manufacturing of complex workpieces, patterns for investment casting, metal molds for injection molding and die casting, and molds and cores for sand casting. Fabrication of prototype objects to enhance communication and testing of concepts during the design cycle are other common usages of AM processes.

In order to monitor the additive manufacturing process, certain conventional additive manufacturing machines include melt pool monitoring systems. The quality evaluation may be used to adjust the build process, stop the build process, troubleshoot build process anomalies, issue a warning to the machine operator, and/or identify suspect or poor quality parts resulting from the build.

Additive manufacturing machines with improved anomaly detection systems would be useful. More particularly, a system and method for utilizing a melt pool monitoring system configured for anomaly detection would be particularly beneficial.

### BRIEF DESCRIPTION OF THE DRAWINGS

Aspects set forth in the drawings are illustrative and exemplary in nature and are not intended to limit the disclosure. The following detailed description of the illustrative aspects can be understood when read in conjunction with the following drawings, where like structure is indicated with like reference numerals.
FIG. 1 depicts an illustrative schematic view of additive manufacturing machine, according to one or more aspects shown and described herein.
FIG. 2 depicts an illustrative a close-up schematic view of a build platform of the exemplary additive manufacturing machine of FIG. 1, according to one or more aspects shown and described herein.
FIG. 3 depicts a flow diagram of an illustrative method for additive manufacturing anomaly detection, according to one or more aspects shown and described herein.
FIG. 4 depicts illustrative high-rate time-series signals, according to one or more aspects shown and described herein.
FIG. 5 depicts an illustrative system for implementing the methods for additive manufacturing anomaly detection, according to one or more aspects shown and described herein.

### DETAILED DESCRIPTION

Aspects of the present disclosure provide systems and methods for additive manufacturing anomaly detection. More specifically, aspects are directed to providing systems and method for detection of anomalies (also referred to as defects) using high frequency analysis melt pool emission signals.

As described in detail herein, aspects of the present disclosure provide technical solutions to technical problems related to conventional methods for melt pool monitoring systems that miss many anomalies of interest because the anomaly is too small to impact the intensity or temperature of an interaction between an energy source and powder at a first focal point on a layer of additive material. Conventional methods implemented by melt pool monitoring systems may also miss anomalies of interest because the time of the interaction corresponding to the anomaly may be too short to impact the intensity or temperature.

To address these problems, aspects of the additive manufacturing anomaly detection techniques described herein combine collection of high rate time-series signals and analysis of the high-frequency signal variation component to solve the technical problems of missed anomaly detection by conventional melt pool monitoring systems. As described in more detail herein, the additive manufacturing anomaly detection techniques are capable of detecting small anomalies (e.g., anomalies of 1 millimeter or less) and anomalies occurring over a short time-scale (e.g., occurrences in the order of microseconds or less) from high rate time-series signals collected from an electromagnetic energy sensor. The high rate time-series signals are decomposed into a high-frequency signal variation component. One or more spatiotemporal statistical values can be computed from the high-frequency signal variation components and analyzed with a machine learning model configured to identify one or more perturbations, from the one or more spatiotemporal statistical values that exceeds a predetermined threshold corresponding to the one or more spatiotemporal statistical values.

As used herein, the term "spatiotemporal" refers to the spatial and temporal relationship between signals and the corresponding data values. That is, as discussed in more detail herein, additive manufacturing processes may build objects in a layer-by-layer manner. A tool path, which may be defined for each layer of the build, defines the pattern that a material deposition tool and/or the energy source follows to build the object. For example, a tool path may include a back-and-forth pattern (also referred to as a raster tool path), an offset pattern (e.g., where the tool path begins on an outer or inner portion of the object and moves inwardly or outwardly, respectively), or other similar techniques. In aspects of the present disclosure, the electromagnetic energy sensor generates high rate time-series signals that correspond to the tool path so that it is possible to obtain the high rate time-series signals corresponding to electromagnetic emissions from the interaction between the energy source and powder at the first focal point on the layer of additive material. Accordingly, as the time-series signals as generated, each data value is related to the others temporally and spatially. Since the data values are spatiotemporally related, statistical values

The additive manufacturing anomaly detection techniques rely electromagnetic energy sensors of an additive manufacturing monitoring system that are capable of data collection at high rate, for example, at a rate of 10 kHz or more, 20 kHz or more, 30 kHz or more, 40 kHz or more, 50 kHz or more, 60 kHz or more, 70 kHz or more, 80 kHz or more, 90 kHz or more, 100 kHz or more, or 200 kHz or more. In some aspects, the sampled data may be downsampled to a lower sampling rate following collection of the data. The electromagnetic energy sensors make it possible to obtain the high rate time-series signals corresponding to electromagnetic emissions from the interaction between the energy source and powder at the first focal point on the layer of additive material.

The additive manufacturing anomaly detection techniques can be applied to a variety of additive manufacturing processes. Additive manufacturing encompasses various manufacturing and prototyping techniques known under a variety of names, including freeform fabrication, 3D printing, rapid prototyping/tooling, etc. Additive manufacturing techniques are capable of fabricating complex components from a wide variety of materials.

Selective laser sintering, direct laser sintering, selective laser melting, and direct laser melting are common industry terms used to refer to producing three-dimensional (3D) objects by using a laser beam to sinter or melt a fine powder. More accurately, sintering entails fusing (agglomerating) particles of a powder at a temperature below the melting point of the powder material, whereas melting entails fully melting particles of a powder to form a solid homogeneous mass. The physical processes associated with laser sintering or laser melting include heat transfer to a powder material and then either sintering or melting the powder material. Although the laser sintering and melting processes can be applied to a broad range of powder materials, the scientific and technical aspects of the production route, for example, sintering or melting rate and the effects of processing parameters on the microstructural evolution during the layer manufacturing process have not been well understood. This method of fabrication is accompanied by multiple modes of heat, mass, and momentum transfer, and chemical reactions that make the process very complex.

During direct metal laser sintering (DMLS) or direct metal laser melting (DMLM), an apparatus builds objects in a layer-by-layer manner by sintering or melting a powder material using an energy beam. The powder to be melted by the energy beam is spread evenly over a powder bed on a build platform, and the energy beam sinters or melts a cross sectional layer of the object being built under control of an irradiation emission directing device. The build platform is lowered and another layer of powder is spread over the powder bed and object being built, followed by successive melting/sintering of the powder. The process is repeated until the part is completely built up from the melted/sintered powder material.

After fabrication of the part is complete, various post-processing procedures may be applied to the part. Post processing procedures include removal of excess powder by, for example, blowing or vacuuming. Other post processing procedures include a stress relief process. Additionally, thermal, mechanical, and chemical post processing procedures can be used to finish the part.

In order to monitor the additive manufacturing process, additive manufacturing machines include additive manufacturing monitoring systems. These monitoring systems typically include one or more electromagnetic energy sensors, such as cameras, photodiodes, pyrometers, light sensors or the like for detecting electromagnetic emissions that are radiated or otherwise emitted from the melt pool generated by the energy beam (e.g., the electromagnetic emissions from the interaction between the energy source and powder at the first focal point on the layer of additive material). The camera or sensor values can be used to evaluate the quality of the build as it proceeds or after completion of the build process. The quality evaluation may be used to adjust the build process, stop the build process, troubleshoot build process anomalies, issue a warning to the machine operator, and/or identify suspect or poor quality parts resulting from the build.

Reference now will be made in detail to aspects of the invention, one or more examples of which are illustrated in the drawings. Each example is provided by way of explanation of the invention, not limitation of the invention. In fact, it will be apparent to those skilled in the art that various modifications and variations can be made in the present disclosure without departing from the scope or spirit of the invention. For instance, features illustrated or described as part of one aspect can be used with another aspect to yield a still further aspect. Thus, it is intended that the present disclosure covers such modifications and variations as come within the scope of the appended claims and their equivalents.

As used herein, the terms "first", "second", and "third" may be used interchangeably to distinguish one component from another and are not intended to signify location or importance of the individual components. In addition, as used herein, terms of approximation, such as "approximately," "substantially," or "about," refer to being within a ten percent margin of error.

A system and method for additive manufacturing anomaly detection utilizes an additive manufacturing monitoring system coupled to the additive manufacturing machine to obtain high rate time-series signals corresponding to electromagnetic emissions from the interaction between the energy source and powder at the first focal point on the layer of additive material. The high rate time-series signals are decomposed into at least a high-frequency signal variation component. One or more spatiotemporal statistical values can be computed from the high-frequency signal variation component. A machine learning model analyzes the one or more spatiotemporal statistical values to identify one or more perturbations that exceeds a predetermined threshold corresponding to the one or more spatiotemporal statistical values.

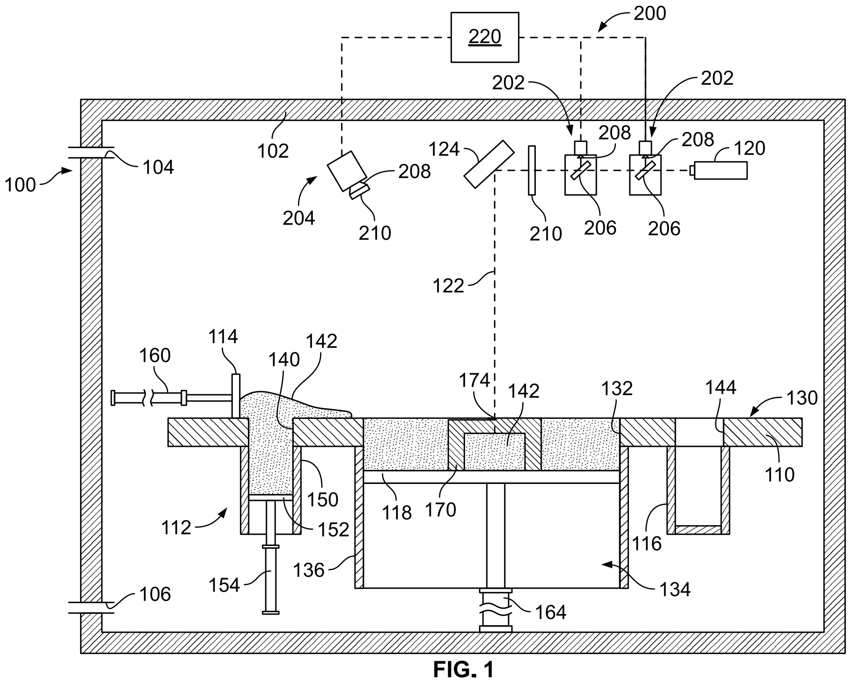

Referring to FIG. 1, a laser powder bed fusion system, referred to herein as "AM system 100", such as a DMLS or DMLM system, will be described according to an exemplary aspect. As illustrated, the AM system 100 may include a fixed enclosure 102 which provides a contaminant-free and controlled environment for performing an additive manufacturing process. For example, the enclosure 102 serves to isolate and protect the other components of the AM system 100. In addition, the enclosure 102 may be provided with a flow of an appropriate shielding gas, such as nitrogen, argon, or another suitable gas or gas mixture. The enclosure 102 may have a gas inlet port 104 and a gas outlet port 106 for receiving a flow of gas to create a static pressurized volume or a dynamic flow of gas.

The enclosure 102 may generally contain some or all components of AM system 100. In certain aspects, the AM system 100 generally includes a table 110, a powder supply 112, a scraper or recoater mechanism 114, an overflow container or overflow reservoir 116, and a build platform 118 positioned within the enclosure 102. In addition, an energy source 120 generates an energy beam 122 and a beam steering apparatus 124 directs energy beam 122 to facilitate the AM process as described in more detail below. Each of these components will be described in more detail below.

The table 110 is a rigid structure defining a planar build surface 130. In addition, the planar build surface 130 defines a build opening 132 through which build chamber 134 may be accessed. In certain aspects, the build chamber 134 is defined at least in part by vertical walls 136 and the build platform 118. In addition, the build surface 130 defines a supply opening 140 through which an additive powder 142 may be supplied from the powder supply 112 and a reservoir opening 144 through which excess additive powder 142 may pass into overflow reservoir 116. Collected additive powders may optionally be treated to sieve out loose, agglomerated particles before re-use.

The powder supply 112 may include an additive powder supply container 150 which generally contains a volume of additive powder 142 sufficient for some or all of the additive manufacturing process for a specific part or parts. In addition, the powder supply 112 includes a supply platform 152, which is a plate-like structure that is movable along the vertical direction within the additive powder supply container 150. More specifically, a supply actuator 154 vertically supports supply platform 152 and selectively moves it up and down during the additive manufacturing process.

The AM system 100 further includes recoater mechanism 114, which is a rigid, laterally-elongated structure that lies proximate build surface 130. For example, the recoater mechanism 114 may be a hard scraper, a soft squeegee, or a roller. The recoater mechanism 114 is operably coupled to a recoater actuator 160 which is operable to selectively move recoater mechanism 114 along build surface 130. In addition, a platform actuator 164 is operably coupled to the build platform 118 and is generally operable for moving the build platform 118 along the vertical direction during the build process. Although actuators 154, 160, and 164 are illustrated as being hydraulic actuators, it should be appreciated that any other type and configuration of actuators may be used according to alternative aspects, such as pneumatic actuators, hydraulic actuators, ball screw linear electric actuators, or any other suitable vertical support means. Other configurations are possible and within the scope of the present subject matter.

The energy source 120 may include any known device operable to generate a beam of suitable power and other operating characteristics to melt and fuse the metallic powder during the build process. For example, the energy source 120 may be a laser. Other directed-energy sources such as electron beam guns are suitable alternatives to a laser.

In certain aspects, the beam steering apparatus 124 includes one or more mirrors, prisms, lenses, and/or electromagnets operably coupled with suitable actuators and arranged to direct and focus the energy beam 122. For example, the beam steering apparatus 124 may be a galvanometer scanner that moves or scans the focal point of the laser beam (e.g., the energy beam 122) emitted by the energy source 120 across the build surface 130 during the laser melting and sintering processes. As such, the energy beam 122 can be focused to a desired spot size and steered to a desired position in plane coincident with build surface 130. The galvanometer scanner in powder bed fusion technologies is typically of a fixed position but the movable mirrors/lenses contained therein allow various properties of the laser beam to be controlled and adjusted. It should be appreciated that other types of energy sources 120 may be used which may use and alternative beam steering apparatus 124. For example, if the energy source 120 is an electronic control unit for directing an electron beam, the beam steering apparatus 124 may be, for example, a deflecting coil.

Prior to an additive manufacturing process, the supply actuator 160 may be lowered to provide a supply of additive powder 142 of a desired composition (for example, metallic, ceramic, and/or organic powder) into the additive powder supply container 150. In addition, the platform actuator 164 may move the build platform 118 to an initial high position, e.g., such that it substantially flush or coplanar with the build surface 130. The build platform 118 is then lowered below the build surface 130 by a selected layer increment. The layer increment affects the speed of the additive manufacturing process and the resolution of a component 170 or part being manufactured. As an example, the layer increment may be about 10 to 100 micrometers (0.0004 to 0.004 in.).

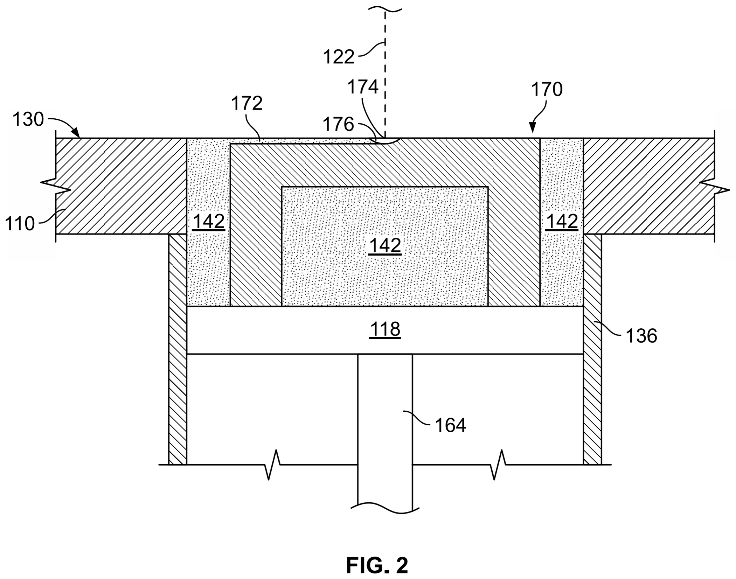

Additive powder is then deposited over the build platform 118 before being fused by energy source 120. Specifically, the supply actuator 154 may raise the supply platform 152 to push powder through the supply opening 140, exposing it above the build surface 130. The recoater mechanism 114 may then be moved across the build surface 130 by the recoater actuator 160 to spread the raised additive powder 142 horizontally over the build platform 118 (e.g., at the selected layer increment or thickness). Any excess additive powder 142 drops through the reservoir opening 144 into the overflow reservoir 116 as the recoater mechanism 114 passes from left to right (as shown in FIG. 1). Subsequently, the recoater mechanism 114 may be moved back to a starting position. The leveled additive powder 142 may be referred to as a "build layer" 172 (see FIG. 2) and the exposed upper surface thereof may be referred to as the build surface 130. When the build platform 118 is lowered into the build chamber 134 during a build process, the build chamber 134 and the build platform 118 collectively surround and support a mass of additive powder 142 along with any components being built. This mass of powder is generally referred to as a "powder bed", and this specific category of additive manufacturing process may be referred to as a "powder bed process."

During the additive manufacturing process, the directed energy source 120 is used to melt a two-dimensional cross-section or layer of the component 170 being built. More specifically, the energy beam 122 is emitted from the energy source 120 and the beam steering apparatus 124 is used to steer the focal spot 174 of the energy beam 122 over the exposed powder surface in an appropriate pattern. A small portion of exposed layer of the additive powder 142 surrounding focal spot 174, referred to herein as a "weld pool" or "melt pool" or "heat effected zone" 176 (best seen in FIG. 2) is heated by the energy beam 122 to a temperature allowing it to sinter or melt, flow, and consolidate. As an example, the melt pool 176 may be on the order of 100 micrometers (0.004 in.) wide. This step may be referred to as fusing the additive powder 142.

The build platform 118 is moved vertically downward by the layer increment, and another layer of additive powder 142 is applied in a similar thickness. The directed energy source 120 again emits the energy beam 122 and the beam steering apparatus 124 is used to steer the focal spot 174 of the energy beam 122 over the exposed powder surface in an appropriate pattern. The exposed layer of additive powder 142 is heated by the energy beam 122 to a temperature allowing it to sinter or melt, flow, and consolidate both within the top layer and with the lower, previously-solidified layer. This cycle of moving the build platform 118, applying additive powder 142, and then directing the energy beam 122 to melt additive powder 142 is repeated until the entire component 170 is complete.

As explained briefly above, as the energy source 120 and the beam steering apparatus 124 direct the energy beam 122, (e.g., a laser beam or electron beam), onto the powder bed or the build surface 130, the additive powders 142 are heated and begin to melt into melt pool 176 where they may fused to form the final component 170. Notably, the heated material emits electromagnetic energy (also referred to herein as "electromagnetic emissions") in the form of visible and invisible light. A portion of the directed energy beam is reflected back into the galvanometer scanner or the beam steering apparatus 124 and a portion is generally scattered in all other directions within the enclosure 102. Monitoring the emitted and/or reflected electromagnetic energy may be used to improve process monitoring and control. An exemplary system for monitoring the additive manufacturing process, including two exemplary types of monitoring sensors, are described below according to exemplary aspects. However, there the system for monitoring the additive manufacturing process may include one or more than two monitoring sensors, such as electromagnetic energy sensors.

Referring still to FIG. 1, an additive manufacturing monitoring system 200 (optionally also referred to as a melt pool monitoring system) may be used with the AM system 100 for monitoring the melt pool 176 and the manufacturing process in general will be described according to an exemplary aspect of the present subject matter. The additive manufacturing monitoring system 200 includes one or more electromagnetic energy sensors, e.g., such as cameras, photodiodes, pyrometers, light sensors or the like, for measuring the amount of visible or invisible electromagnetic energy emitted from or reflected by the melt pool 176. More specifically, according to the illustrated aspect, the additive manufacturing monitoring system 200 includes one or more on-axis sensors 202 (e.g., on-axis light sensors and or melt pool sensors) and optionally, one fixed, off-axis sensor 204 (e.g., an off-axis light sensor and/or a pool sensor). Each of these sensors 202, 204 will be described below according to an exemplary aspect. However, it should be appreciated that the additive manufacturing monitoring system 200 may include any other suitable type, number, and configuration of sensors for detecting electromagnetic energy and other properties of melt pool 176 or the process in general.

As used herein, "beamline" or "on-axis" melt-pool sensors (e.g., one of the one or more on-axis sensors 202) refer to sensors which generally are positioned along the path of the energy beam 122. These sensors may monitor emitted and/or reflected light returning along the beam path. Specifically, as the energy beam 122 forms the melt pool 176, a portion of the emitted and reflected electromagnetic energy from the melt pool 176 returns to the energy source 120 along the same path. An on-axis sensor 202 may include a beam splitter 206 positioned along the beamline which may include a coating for redirecting a portion of the electromagnetic energy toward a beamline sensing element 208. In this regard, for example, the sensing element 208 may be a photodiode, a pyrometer, an optical camera, an infrared (IR) camera, or a spectral sensor configured for measuring electromagnetic energy in any frequency spectrum(s), such as infrared (IR), ultraviolet (UV), visible light, etc. The on-axis sensor 202 can measure any suitable parameter of the filtered, reflected beam, such as intensity, frequency, wavelength, etc.

In addition, as used herein, "fixed" or "off-axis" melt-pool sensors 204 refer to sensors which generally have a fixed position relative to the melt pool 176 and are used to measure electromagnetic energy generated by the energy beam 122 and the melt pool 176 within a specified field of view. In addition, the fixed melt pool sensors 204 may include any suitable device, such as, e.g., a photodiode or infrared (IR) camera. The off-axis melt pool sensors 204 may operate in a manner similar to the on-axis melt pool sensors, but are not located on the beamline and include a sensing element 208 that is generally configured for monitoring scattered electromagnetic energy from the melt pool 176.

In certain aspects of the present subject matter, the additive manufacturing monitoring system 200 may further include one or more filters 210 for filtering electromagnetic energy before it reaches the sensing elements 208 of the respective sensors 202, 204. For example, the one or more filters 210 may remove the wavelength of energy beam 122, such that the sensors 202, 204 monitor only reflected electromagnetic energy. Alternatively, the one or more filters 210 may be configured for removing other unwanted wavelengths for improved monitoring of the melt pool 176 or the process in general.

The additive manufacturing monitoring system 200 further includes a controller 220 which is operably coupled with the on-axis light sensor 202 and/or the off-axis light sensor 204 for receiving signals corresponding to the detected electromagnetic energy. The controller 220 may be a dedicated controller for the additive manufacturing monitoring system 200 or may be system controller for operating AM system 100. The controller 220 may include one or more memory devices and one or more processors, such as general or special purpose processors operable to execute programming instructions or micro-control code associated with an additive manufacturing process or process monitoring. The memory may represent random access memory such as DRAM, or read only memory such as ROM or FLASH. In certain aspects, the processor executes programming instructions stored in memory. The memory may be a separate component from the processor or may be included onboard within the processor. Alternatively, the controller 220 may be constructed without using a processor, e.g., using a combination of discrete analog and/or digital logic circuitry (such as switches, amplifiers, integrators, comparators, flip-flops, AND gates, and the like) to perform control functionality instead of relying upon software.

As explained briefly above, conventional melt pool monitoring systems miss many anomalies of interest because the anomaly is too small to impact the intensity or temperature of an interaction between an energy source and powder at a first focal point on a layer of additive material. Additionally, conventional methods for melt pool monitoring may also miss anomalies of interest because the time of the interaction corresponding to the anomaly may be too short to impact the intensity or temperature. Therefore, aspects of the present disclosure are directed to systems and methods for additive manufacturing anomaly detection that combine collection of high rate time-series signals from one or more electromagnetic energy sensors and analysis of the high-frequency signal variation component to solve the technical problem of missed anomaly detection by conventional melt pool monitoring systems.

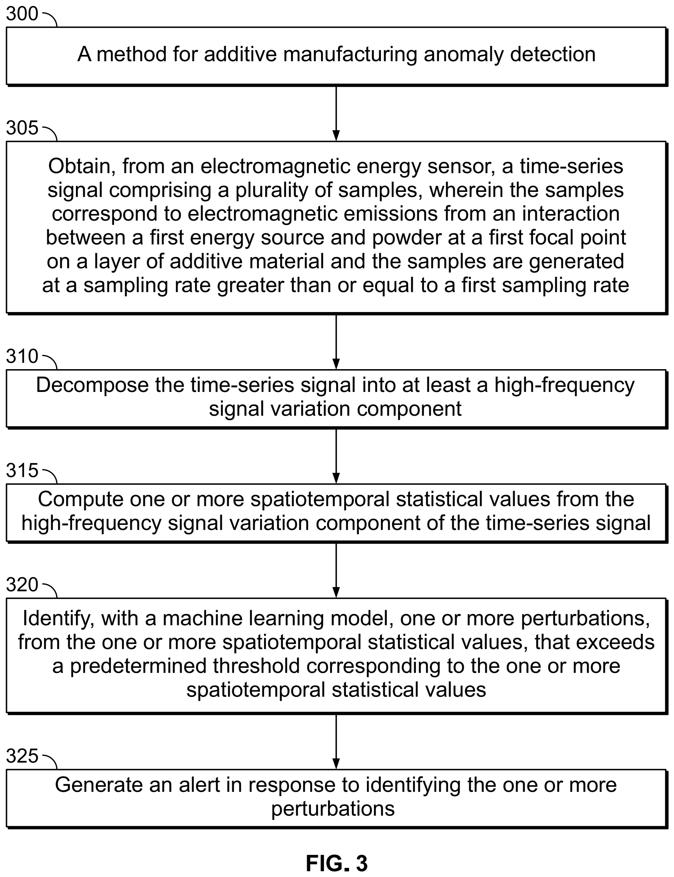

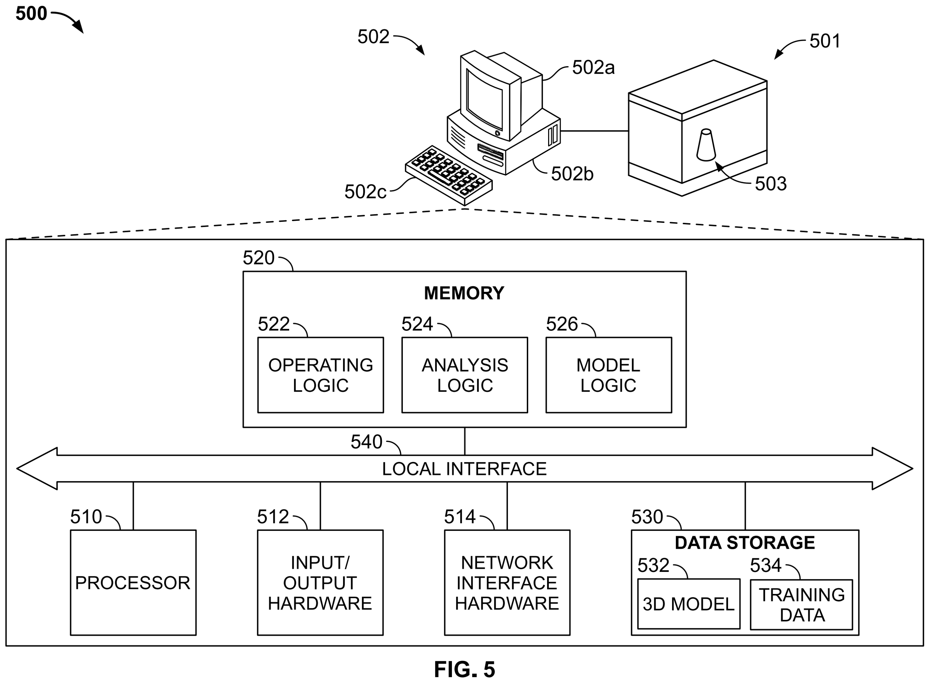

FIG. 3 depicts a flowchart of a method 300 for additive manufacturing anomaly detection. In some aspects, the method 300 may be performed by an apparatus, such as the controller 220 of the AM system 100 depicted and described with reference to FIG. 1 and/or the computing system 500 of FIG. 5.

The method 300 for additive manufacturing anomaly detection begins at block 305 with obtaining a time-series signal comprising a plurality of samples from the one or more electromagnetic energy sensors. The plurality of samples are obtained, for example, from the sensors 202 or 204, which may include one or more electromagnetic energy sensors, such as cameras, photodiodes, pyrometers, light sensors or the like, for measuring the amount of visible or invisible electromagnetic energy emitted from or reflected by the melt pool. The plurality of samples correspond to electromagnetic emissions from an interaction between a first energy source and powder at a first focal point on a layer of additive material and the samples are generated at a sampling rate greater than or equal to a first sampling rate.

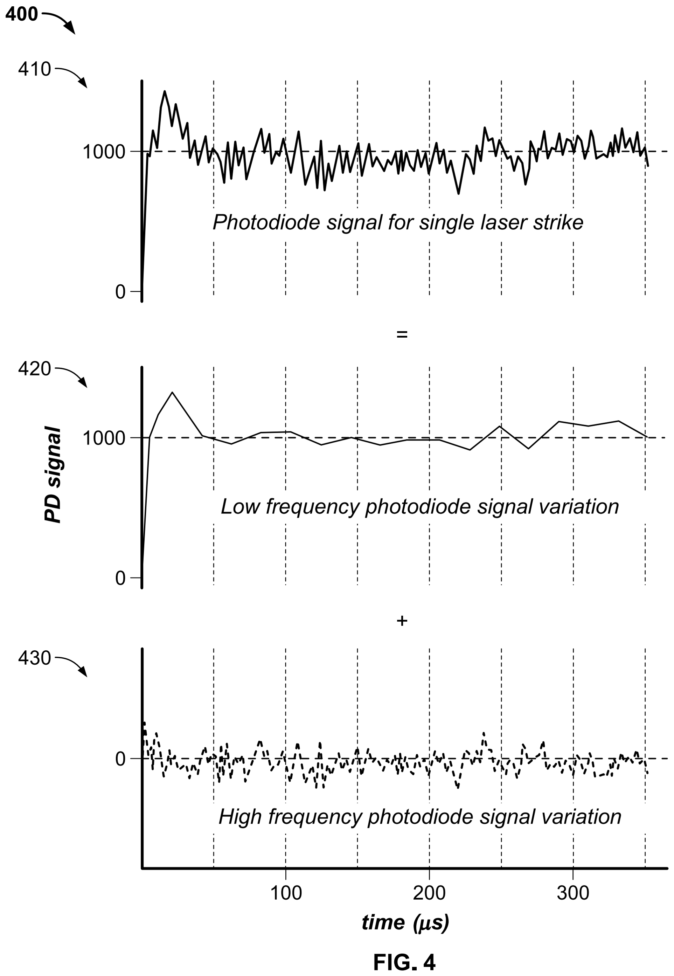

In certain aspects, the one or more electromagnetic energy sensors are configured to generate the time-series signal at a high-rate, for example, at a rate of 10 kHz or more, 20 kHz or more, 30 kHz or more, 40 kHz or more, 50 kHz or more, 60 kHz or more, 70 kHz or more, 80 kHz or more, 90 kHz or more, 100 kHz or more, or 200 kHz or more. FIG. 4 depicts an illustrative high-rate time-series signal 410 that may be generated by the one or more electromagnetic energy sensors and obtained by the apparatus implementing the method 300.

The method 300 continues at block 310 with decomposing the time-series signal into at least a high-frequency signal variation component. In certain aspects, the high-frequency signal variation component includes spatial and frequency elements. That is, since the time-series signal is obtained from emissions based on the interaction between the energy source and the powder at the focal point on the layer of additive material, as the focal point of the interaction moves across the part being built, the time-series signal includes a spatial component associated with the X-Y plane of the layer of additive material.

The process of decomposing time-series signal into at least the high-frequency signal variation component can be performed by one of a variety of techniques. In some aspects, a wavelet packet decomposition process may be used to ingest the time-series signal and output high-frequency signal variation component. In certain instances where a wavelet packet decomposition process is utilized, discrete time intervals may be defined such that the high-frequency signal variation component corresponds to the defined discrete time intervals. In other instances, a continuous wavelet transform may be used to process the time-series signal into high-frequency signal variation components.

In some aspects, a short-time Fourier transform may be implemented to ingest the time-series signal and output high-frequency signal variation component. For example, FIG. 4 depicts an illustrative low-frequency signal variation component 420 and a high-frequency signal variation component 430 that may each or separately decomposed from the high-rate time-series signal 410.

As used herein, "high-frequency" refers to 10 kHz or more, 20 kHz or more, 30 kHz or more, 40 kHz or more, 50 kHz or more, 60 kHz or more, 70 kHz or more, 80 kHz or more, 90 kHz or more, 100 kHz or more, or 200 kHz or more. The additive manufacturing anomaly detection techniques are directed to analysis of the high-frequency signal variation component as opposed to the low-frequency signal variation component because the problem with conventional monitoring systems is the inability to detect anomalies that are too small to impact the intensity or temperature of an interaction or occur at too short of a time interval to impact the intensity or temperature, but cause anomalies that can impact the strength, integrity, or structure of the final part being additively manufactured. Some example anomalies may include flaws having a size of 1 millimeter or less, spatter, small powder drops, keyholing (e.g., the formation of a pore), or the like.

The method 300 continues at block 315 with computing one or more spatiotemporal statistical values from the high-frequency signal variation component of the time-series signal. At block 315, one or more spatiotemporal statistical values, such as entropy, energy statistics, percentiles comparison between discrete intervals of time, median, standard deviation within a discrete interval of time, and the like. In some aspects, various combinations of a plurality of spatiotemporal statistical values may be computed for the high-frequency signal variation component. It should be understood that various combinations of spatiotemporal statistical values may give rise to indications of different anomalies. Accordingly, depending on the type of anomaly that is desired to be identified, the corresponding spatiotemporal statistical values may be computed and subsequently processed by the machine learning model.

In certain aspects, various spatial and/or various temporal relationships between the high-frequency signal variation component of the time-series signal may be analyzed to obtain the one or more spatiotemporal statistical values. For example, spatial relationships may be defined by voxel spaces, which define either two-dimensional spaces of a layer or three-dimensional spaces of a respective layer and one or more layers above and/or below the respective layer of the build. Furthermore, for example, the temporal relationships may be defined by one or more lengths of time or a number of time frames sequentially spaced apart. In some instances, the lengths of time or time frames may respectively overlap each other such that the statistical values that are obtained may be determine on a rolling basis. In some instances, the statistical values that are obtained may be determine on a rolling basis without overlap in time or space.

The method 300 continues at block 320 with identifying one or more perturbations from the one or more spatiotemporal statistical values. The presence of one or more perturbations in the signal corresponds to the presence of anomaly. The process of identifying one or more perturbations from the one or more spatiotemporal statistical values maybe carried out by a machine learning model, such as a random forest, neural network, or other model that is configured for identifying the one or more perturbations. In some aspects, indication of the one or more perturbations may be based on a determination or prediction by the machine learning model that the one or more perturbations exceeds a predetermined threshold corresponding to the one or more spatiotemporal statistical values. For example, each of the one or more spatiotemporal statistical values may have a predetermined threshold that provides an indication that when the spatiotemporal statistical value is beyond the predetermined threshold, then there is a likelihood that a perturbation is present. In certain aspects, the predetermined threshold(s) are built into the model through training, thus a determination that a spatiotemporal statistical value exceeds the predetermined threshold is function of model as opposed to an explicit determination. In some aspects, the predetermined threshold(s) may correspond to control limits for a statistical process control (SPC) of the additive manufacturing machine.

In some aspects, the method 300 continues at block 325 with generating an alert in response to identifying a presence of the one or more perturbations. The alert may be manifested by the AM system 100 in a variety of ways. For example, the alert may be in the form of an audio message, visual indication, text indication, display prompt, analysis report, or the like that is provided to the user of the additive manufacturing machine or provided to another control system to cause one or more further actions to be executed. For example, the alert may cause the additive manufacturing machine to pause or stop a build process. In some instances, the alert may include information corresponding to the anomaly that was detected such as a prediction regarding what type of anomaly was detected, such as a flaw, a spatter, a powder drop, a pore in a surface, or the like. In some aspects, the alert may include spatial information such as the X-Y location of the anomaly and/or the Z location based on the layer number, referred to herein as a layer-wise spatial map. In some aspects, the alert may include an intensity and/or time stamp corresponding to the anomaly. The alert and any information defined by the alert may be further compiled into an analysis report that is provided as an output to the user. The analysis report may include a heatmap for each layer of a part that is being built, where the heatmap indicates the likelihood of an anomaly at a location on the specific layer. It should be understood that these are only some illustrative examples of the alert and how the alert may be manifested. Other forms and types of alerts may be generated by the additive manufacturing anomaly detection techniques described herein.

The functional blocks and/or flow diagram elements described herein may be translated into machine-readable instructions or as a computer program product, which when executed by a computing device, causes the computing device to carry out the functions of the blocks. As non-limiting examples, the machine-readable instructions may be written using any programming protocol, such as: descriptive text to be parsed (e.g., such as hypertext markup language, extensible markup language, etc.), (ii) assembly language, (iii) object code generated from source code by a compiler, (iv) source code written using syntax from any suitable programming language for execution by an interpreter, (v) source code for compilation and execution by a just-in-time compiler, etc. Alternatively, the machine-readable instructions may be written in a hardware description language (HDL), such as logic implemented via either a field programmable gate array (FPGA) configuration or an application-specific integrated circuit (ASIC), or their equivalents. Accordingly, the functionality described herein may be implemented in any conventional computer programming language, as pre-programmed hardware elements, or as a combination of hardware and software components.

Referring now to FIG. 5, the computing system 500 may be deployed over a network. The network may include a wide area network, such as the internet, a local area network (LAN), a mobile communications network, a public service telephone network (PSTN) and/or other network. The network may be configured to electronically and/or communicatively connect a computing device 502 and AMM 501, such as the AM system 100 depicted and described with reference to FIGS. 1 and 2.

The computing device 502 may include a display 502a, a processing unit 502b and an input device 502c, each of which may be communicatively coupled together and/or to the network. The computing device 502 may be a server, a personal computer, a laptop, a tablet, a smartphone, a handheld device, or the like. The computing device 502 may be used by a user of the system to provide information to the system. The computing device 502 may utilize a local application or a web application to access the AMM 501. The system may also include one or more data servers having one or more databases from which information may be queried, extracted, updated, and/or utilized by the computing device 502 and/or the AMM 501.

It is also understood that while the computing device 502 is depicted as a personal computer, however, this is merely an example. In some aspects, any type of computing device (e.g., mobile computing device, personal computer, server, and the like) may be utilized for any of these components. The AMM 501 may be any rapid-prototyping, rapid manufacturing device, or additive manufacturing device such as a binder jet additive manufacturing, fused deposition modeling (FDM), stereolithography (SLA), digital light processing (DLP), selective laser sintering (SLS), selective laser melting (SLM), laminated object manufacturing (LOM), electron beam melting (EBM), and/or the like. The AMM 501 may include a processor and memory and other electronic components for receiving a computer model of a part 503 for printing. The computer model may be converted to a design configuration file corresponding to the part 503 for additive manufacturing and may be uploaded to the AMM 501, for example, by the computing device 502.

As illustrated in FIG. 5, the computing device 502 includes a processor 510, input/output hardware 512, network interface hardware 514, a data storage component 530, and a memory module 520. The memory module 520 may be machine readable memory (which may also be referred to as a non-transitory processor readable memory). The memory module 520 may be configured as volatile and/or nonvolatile memory and, as such, may include random access memory (including SRAM, DRAM, and/or other types of random access memory), flash memory, registers, compact discs (CD), digital versatile discs (DVD), and/or other types of storage components. Additionally, the memory module 520 may be configured to store operating logic 522, an anomaly detection logic 524 (e.g., logic enabling method 300 depicted in FIG. 3), and model logic 526 (e.g., logic enabling the machine-learning model described herein), each of which may be embodied as a computer program, firmware, or hardware, as an example. A local interface 540 is also included in FIG. 5 and may be implemented as a bus or other interface to facilitate communication among the components of the computing device 502.

The processor 510 may include any processing component(s) configured to receive and execute programming instructions (such as from the data storage component 530 and/or the memory module 520). The instructions may be in the form of a machine-readable instruction set stored in the data storage component 530 and/or the memory module 520. The input/output hardware 512 may include a monitor, keyboard, mouse, printer, camera, microphone, speaker, and/or other device for receiving, sending, and/or presenting data. The network interface hardware 514 may include any wired or wireless networking hardware, such as a modem, LAN port, Wi-Fi card, WiMax card, mobile communications hardware, and/or other hardware for communicating with other networks and/or devices.

It should be understood that the data storage component 530 may reside local to or remote from the computing device 502 and may be configured to store one or more pieces of data for access by the computing device 502 and/or other components. As illustrated in FIG. 5, the data storage component 530 may store computer models 532 (e.g., CAD models) of the part 503 for manufacture, training data 534 for training the machine learning model, and other data for enabling the additive manufacturing anomaly detection techniques described herein. As described herein, the computer models 532 may be of CAD models the part 503 to be manufactured. The CAD models may define attributes of the green part of the part for additive manufacturing, such as a defined geometry, material, design tolerances, powder sizes distribution, binder type and amounts per layer, sintering profile, expansion factors, and the like.

It should now be understood that systems and methods described herein quantify the distortion of components such as binder jet parts during sintering and its variability, using machine-learning methods. In some aspects, methods include receiving an image of a complex geometric part, the complex geometric part capable of being discretized into a plurality of finite elements, processing the image of the complex geometric part with a machine-learning model predicts distortion of the complex geometric part in response to a sintering process, where the machine-learning model is trained to predict distortion of primitive geometric coupons having fewer finite elements than the complex geometric part, and generating an image of the predicted distortion of the complex geometric part. The surrogate models are trained to make predictions on simple geometries so that when complex geometries are input to the model, the trained surrogate models can correlate the learned behaviors of simple components following sintering to discrete features of the complex geometry thereby enabling predictions of distortion of complex geometry components. Furthermore, the model can predict mean distortion and variability of distortion due to variability in input data set - green density, sintering temperature, etc.

Further aspects of the disclosure are provided by the subject matter of the following clauses:

A method for additive manufacturing anomaly detection, the method comprising: obtaining, from an electromagnetic energy sensor, a time-series signal comprising a plurality of samples, wherein the samples correspond to electromagnetic emissions from an interaction between a first energy source and powder at a first focal point on a layer of additive material and the samples are generated at a sampling rate greater than or equal to a first sampling rate; decomposing the time-series signal into at least a high-frequency signal variation component; computing one or more spatiotemporal statistical values from the high-frequency signal variation component of the time-series signal; identifying, with a machine learning model, one or more perturbations, from the one or more spatiotemporal statistical values, that exceeds a predetermined threshold corresponding to the one or more spatiotemporal statistical values; and generating an alert in response to identifying the one or more perturbations.

The method of any of the preceding clauses, wherein decomposing the time-series signal into at least the high-frequency signal variation component comprises passing the time-series signal through a wavelet packet decomposition process to decompose the time-series signal into the high-frequency signal variation component.

The method of any of the preceding clauses, wherein decomposing the time-series signal into at least the high-frequency signal variation component comprises implementing a short-time Fourier transform of the time-series signal to generate the high-frequency signal variation component.

The method of any of the preceding clauses, further comprising selecting a time period of the time-series signal, the time period is a portion of the time-series signal, and wherein computing the one or more spatiotemporal statistical values comprises computing the one or more spatiotemporal statistical values from the high-frequency signal variation component associated with the portion of the time-series signal.

The method of any of the preceding clauses, wherein identifying the one or more perturbations comprises feeding the one or more spatiotemporal statistical values and the high-frequency signal variation component of the time-series signal to the machine learning model configured to predict a presence of the one or more perturbations based on the one or more spatiotemporal statistical values and the high-frequency signal variation component of the time-series signal.

The method of any of the preceding clauses, further comprising generating an analysis report comprising a layer-wise spatial map comprising a visual indication of the one or more perturbations, wherein the visual indication corresponds to at least one of an intensity or a location of the one or more perturbations.

The method of any of the preceding clauses, wherein generating the alert comprises causing an additive manufacturing machine to emit an audio or visual indication.

The method of any of the preceding clauses, further comprising: depositing the layer of additive material on a powder bed of an additive manufacturing machine; and selectively directing energy from the first energy source onto the first focal point on the layer of additive material.

The method of any of the preceding clauses, wherein the first sampling rate is a rate greater than or equal to 10 kHz.

An additive manufacturing system comprising: a powder depositing system for depositing a layer of additive material onto a powder bed of the additive manufacturing machine; a first energy source for selectively directing a first energy beam onto a first focal point on the layer of additive material; an electromagnetic energy sensor configured to generate a time-series signal comprising a plurality of samples at a sampling rate greater than or equal to a first sampling rate, the plurality of samples correspond to electromagnetic emissions from an interaction between the first energy source and powder at the first focal point on the layer of additive material; and a controller operably coupled to the electromagnetic energy sensor, the controller being configured to: obtain, from the electromagnetic energy sensor, the time-series signal; decompose the time-series signal into at least a high-frequency signal variation component; compute one or more spatiotemporal statistical values from the high-frequency signal variation component of the time-series signal; identify one or more perturbations, from the one or more spatiotemporal statistical values, that exceeds a predetermined threshold corresponding to the one or more spatiotemporal statistical values; and generate an alert in response to identifying the one or more perturbations.

An additive manufacturing system comprising: a powder depositing system for depositing a layer of additive material onto a powder bed of an additive manufacturing machine; a first energy source for selectively directing a first energy beam onto a first focal point on the layer of additive material; an electromagnetic energy sensor configured to generate a time-series signal comprising a plurality of samples at a sampling rate greater than or equal to a first sampling rate, the plurality of samples correspond to electromagnetic emissions from an interaction between the first energy source and powder at the first focal point on the layer of additive material; and a controller operably coupled to the electromagnetic energy sensor, the controller being configured to: obtain, from the electromagnetic energy sensor, the time-series signal; decompose the time-series signal into at least a high-frequency signal variation component; compute one or more spatiotemporal statistical values from the high-frequency signal variation component of the time-series signal; identify, with a machine learning model, one or more perturbations, from the one or more spatiotemporal statistical values, that exceeds a predetermined threshold corresponding to the one or more spatiotemporal statistical values; and generate an alert in response to identifying the one or more perturbations.

The additive manufacturing system any of the preceding clauses, wherein to decompose the time-series signal into at least the high-frequency signal variation component the controller is further configured to pass the time-series signal through a wavelet packet decomposition process.

The additive manufacturing system any of the preceding clauses, wherein to decompose the time-series signal into at least the high-frequency signal variation component the controller is further configured to implement a short-time Fourier transform of the time-series signal.

The additive manufacturing system any of the preceding clauses, wherein the controller is further configured to select a time period of the time-series signal, the time period is a portion of the time-series signal, and wherein computing the one or more spatiotemporal statistical values comprises computing the one or more spatiotemporal statistical values from the high-frequency signal variation component associated with the portion of the time-series signal.

The additive manufacturing system any of the preceding clauses, wherein to identify the one or more perturbations the controller is further configured to feed the one or more spatiotemporal statistical values and the high-frequency signal variation component of the time-series signal to the machine learning model configured to predict a presence of the one or more perturbations based on the one or more spatiotemporal statistical values and the high-frequency signal variation component of the time-series signal.

The additive manufacturing system any of the preceding clauses, wherein the controller is further configured to generate an analysis report comprising a layer-wise spatial map comprising a visual indication of the one or more perturbations, wherein the visual indication corresponds to at least one of an intensity or a location of the one or more perturbations.

The additive manufacturing system any of the preceding clauses, wherein to generate the alert comprises causing an additive manufacturing machine to emit an audio or visual indication.

The additive manufacturing system any of the preceding clauses, wherein the controller is further configured to: deposit the layer of additive material on a powder bed of an additive manufacturing machine; and selectively direct energy from the first energy source onto the first focal point on the layer of additive material.

The additive manufacturing system any of the preceding clauses, wherein the first sampling rate is a rate greater than or equal to 10 kHz.

A apparatus comprising: a controller that includes one or more processors and one or more memories coupled with the one or more processors, the controller configured to cause the apparatus to: obtain, from an electromagnetic energy sensor, the time-series signal comprising a plurality of samples, wherein the samples correspond to electromagnetic emissions from an interaction between a first energy source and powder at a first focal point on a layer of additive material and the samples are generated at a sampling rate greater than or equal to a first sampling rate; decompose the time-series signal into at least a high-frequency signal variation component; compute one or more spatiotemporal statistical values from the high-frequency signal variation component of the time-series signal; identify one or more perturbations, from the one or more spatiotemporal statistical values, that exceeds a predetermined threshold corresponding to the one or more spatiotemporal statistical values; and generate an alert in response to identifying the one or more perturbations.

The apparatus any of the preceding clauses, wherein the first sampling rate is a rate greater than or equal to 10 kHz.

The preceding description is provided to enable any person skilled in the art to practice the various aspects described herein. The examples discussed herein are not limiting of the scope, applicability, or aspects set forth in the claims. Various modifications to these aspects will be readily apparent to those skilled in the art, and the general principles defined herein may be applied to other aspects. For example, changes may be made in the function and arrangement of elements discussed without departing from the scope of the disclosure. Various examples may omit, substitute, or add various procedures or components as appropriate. For instance, the methods described may be performed in an order different from that described, and various actions may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

The various illustrative logical blocks, modules and circuits described in connection with the present disclosure may be implemented or performed with a general purpose processor, an AI processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, a SoC, a SiP, or any other such configuration.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

As used herein, "coupled to" and "coupled with" generally encompass direct coupling and indirect coupling (e.g., including intermediary coupled aspects) unless stated otherwise. For example, stating that a processor is coupled to a memory allows for a direct coupling or a coupling via an intermediary aspect, such as a bus.

The methods disclosed herein comprise one or more actions for achieving the methods. The method actions may be interchanged with one another without departing from the scope of the claims. In other words, unless a specific order of actions is specified, the order and/or use of specific actions may be modified without departing from the scope of the claims. Further, the various operations of methods described above may be performed by any suitable means capable of performing the corresponding functions. The means may include various hardware and/or software component(s) and/or module(s), including, but not limited to a circuit, an ASIC, or processor.

The following claims are not intended to be limited to the aspects shown herein, but are to be accorded the full scope consistent with the language of the claims. Reference to an element in the singular is not intended to mean only one unless specifically so stated, but rather "one or more." The subsequent use of a definite article (e.g., "the" or "said") with an element (e.g., "the processor") is not intended to invoke a singular meaning (e.g., "only one") on the element unless otherwise specifically stated. For example, reference to an element (e.g., "a processor," "the processor," etc.), unless otherwise specifically stated, should be understood to refer to one or more elements (e.g., "one or more processors," or the like). The terms "set" and "group" are intended to include one or more elements, and may be used interchangeably with "one or more." Where reference is made to one or more elements performing functions (e.g., steps of a method), one element may perform all functions, or more than one element may collectively perform the functions. When more than one element collectively performs the functions, each function need not be performed by each of those elements (e.g., different functions may be performed by different elements) and/or each function need not be performed in whole by only one element (e.g., different elements may perform different sub-functions of a function). Similarly, where reference is made to one or more elements configured to cause another element (e.g., an apparatus) to perform functions, one element may be configured to cause the other element to perform all functions, or more than one element may collectively be configured to cause the other element to perform the functions. Unless specifically stated otherwise, the term "some" refers to one or more. All structural and functional equivalents to the elements of the various aspects described throughout this disclosure that are known or later come to be known to those of ordinary skill in the art are intended to be encompassed by the claims. Moreover, nothing disclosed herein is intended to be dedicated to the public regardless of whether such disclosure is explicitly recited in the claims.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

While particular aspects have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

## Claims

1. A method for additive manufacturing anomaly detection, the method comprising:
obtaining, from an electromagnetic energy sensor, a time-series signal comprising a plurality of samples, wherein the samples correspond to electromagnetic emissions from an interaction between a first energy source and powder at a first focal point on a layer of additive material and the samples are generated at a sampling rate greater than or equal to a first sampling rate;
decomposing the time-series signal into at least a high-frequency signal variation component;
computing one or more spatiotemporal statistical values from the high-frequency signal variation component of the time-series signal;
identifying, with a machine learning model, one or more perturbations, from the one or more spatiotemporal statistical values that exceeds a predetermined threshold corresponding to the one or more spatiotemporal statistical values; and
generating an alert in response to identifying the one or more perturbations.

2. The method of claim 1, wherein decomposing the time-series signal into at least the high-frequency signal variation component comprises passing the time-series signal through a wavelet packet decomposition process to decompose the time-series signal into the high-frequency signal variation component.

3. The method of claim 1, wherein decomposing the time-series signal into at least the high-frequency signal variation component comprises implementing a short-time Fourier transform of the time-series signal to generate the high-frequency signal variation component.

4. The method of any preceding claim, further comprising selecting a time period of the time-series signal, the time period is a portion of the time-series signal, and wherein computing the one or more spatiotemporal statistical values comprises computing the one or more spatiotemporal statistical values from the high-frequency signal variation component associated with the portion of the time-series signal.

5. The method of any preceding claim, wherein identifying the one or more perturbations comprises feeding the one or more spatiotemporal statistical values and the high-frequency signal variation component of the time-series signal to the machine learning model configured to predict a presence of the one or more perturbations based on the one or more spatiotemporal statistical values and the high-frequency signal variation component of the time-series signal.

6. The method of any preceding claim, further comprising generating an analysis report comprising a layer-wise spatial map comprising a visual indication of the one or more perturbations, wherein the visual indication corresponds to at least one of an intensity or a location of the one or more perturbations.

7. The method of any preceding claim, wherein generating the alert comprises causing an additive manufacturing machine to emit an audio or visual indication.

8. The method of any preceding claim, further comprising:
depositing the layer of additive material on a powder bed of an additive manufacturing machine; and
selectively directing energy from the first energy source onto the first focal point on the layer of additive material.

9. The method of any preceding claim, wherein the first sampling rate is a rate greater than or equal to 10 kHz.

10. An additive manufacturing system comprising:
a powder depositing system for depositing a layer of additive material onto a powder bed of an additive manufacturing machine;
a first energy source for selectively directing a first energy beam onto a first focal point on the layer of additive material;
an electromagnetic energy sensor configured to generate a time-series signal comprising a plurality of samples at a sampling rate greater than or equal to a first sampling rate, the plurality of samples correspond to electromagnetic emissions from an interaction between the first energy source and powder at the first focal point on the layer of additive material; and
a controller operably coupled to the electromagnetic energy sensor, the controller being configured to:
obtain, from the electromagnetic energy sensor, the time-series signal;
decompose the time-series signal into at least a high-frequency signal variation component;
compute one or more spatiotemporal statistical values from the high-frequency signal variation component of the time-series signal;
identify, with a machine learning model, one or more perturbations, from the one or more spatiotemporal statistical values, that exceeds a predetermined threshold corresponding to the one or more spatiotemporal statistical values; and
generate an alert in response to identifying the one or more perturbations.

11. The additive manufacturing system of claim 10, wherein to decompose the time-series signal into at least the high-frequency signal variation component the controller is further configured to:
pass the time-series signal through a wavelet packet decomposition process to decompose the time-series signal, or
implement a short-time Fourier transform of the time-series signal.

12. The additive manufacturing system of any of claims 10-11, wherein the controller is further configured to select a time period of the time-series signal, the time period is a portion of the time-series signal, and wherein computing the one or more spatiotemporal statistical values comprises computing the one or more spatiotemporal statistical values from the high-frequency signal variation component associated with the portion of the time-series signal.

13. The additive manufacturing system of any of claims 10-12, wherein to identify the one or more perturbations the controller is further configured to feed the one or more spatiotemporal statistical values and the high-frequency signal variation component of the time-series signal to the machine learning model configured to predict a presence of the one or more perturbations based on the one or more spatiotemporal statistical values and the high-frequency signal variation component of the time-series signal.

14. The additive manufacturing system of any of claims 10-13, wherein the controller is further configured to generate an analysis report comprising a layer-wise spatial map comprising a visual indication of the one or more perturbations, wherein the visual indication corresponds to at least one of an intensity or a location of the one or more perturbations.

15. The additive manufacturing system of any of claims 10-14, wherein the first sampling rate is a rate greater than or equal to 10 kHz.
